# EUROPÄISCHE PATENTSCHRIFT

(11) **EP 4 466 177 B1**
(45) Veröffentlichungstag und Bekanntmachung des Hinweises auf die Patenterteilung: **04.03.2026**
(21) Anmeldenummer: 23701276.0
(22) Anmeldetag: 17.01.2023
(51) Int. Cl.: B62J 45/421

(54) **ANTRIEBSEINHEIT FÜR EIN ELEKTROFAHRRAD MIT ZWEI EINE ELASTISCHE VERFORMUNG BERÜCKSICHTIGENDEN SIGNALGEBERN UND STEUERUNGSVERFAHREN**
DRIVE UNIT FOR AN ELECTRIC BICYCLE, COMPRISING TWO SIGNAL TRANSMITTERS TAKING INTO ACCOUNT ELASTIC DEFORMATION, AND CONTROL METHOD
UNITÉ D'ENTRAÎNEMENT POUR UNE BICYCLETTE ÉLECTRIQUE COMPRENANT DEUX ÉMETTEURS DE SIGNAUX PRENANT EN COMPTE UNE DÉFORMATION ÉLASTIQUE, ET PROCÉDÉ DE COMMANDE

(30) Priorität: 20.01.2022 DE 102022101317
(43) Veröffentlichungstag der Anmeldung: 27.11.2024
(73) Patentinhaber: Brose Antriebstechnik GmbH & Co. Kommanditgesellschaft, Berlin, 10553 Berlin (DE)
(72) Erfinder: WEIGEL, Christfried, 13599 Berlin (DE)
(74) Vertreter: Grünecker Patent- und Rechtsanwälte PartG mbB
(86) Internationale Anmeldenummer: PCT/EP2023/050987
(87) Internationale Veröffentlichungsnummer: WO 2023/139055

(56) Entgegenhaltungen:
- EP-A1- 3 012 181
- DE-A1- 102010 048 592
- DE-A1- 3 213 589
- JP-A- 2010 038 801
- JP-A- 2010 066 043
- JP-A- 2012 020 692

## Beschreibung

Die vorgeschlagene Lösung betrifft eine Antriebseinheit für ein Elektrofahrrad sowie ein Steuerungsverfahren für eine solche Antriebseinheit.

Es ist bekannt, an einem Elektrofahrrad, mithin an einem sogenannten E-Bike oder Pedelec, wenigstens einen Elektromotor in Kombination mit einer, z.B. eine Planetenradstufe aufweisenden, Getriebeeinrichtung einzusetzen, um ein eine motorische Unterstützung beim Fahren des Elektrofahrrads bereitzustellen. Eine entsprechende Antriebseinheit weist hierbei zum einen eine Antriebswelle (typischerweise auch als Tretlagerwelle bezeichnet) auf, über die ein von einem Fahrer des Elektrofahrrads erzeugtes Antriebsdrehmoment eingeleitet werden kann und an der hierfür Pedale vorgesehen sind. Zusätzlich zu einem an der Antriebswelle muskelkraftbetätigt eingeleiteten ersten Antriebsdrehmoment kann fremdkraftbetätigt, z.B. mithilfe eines Elektromotors, ein zweites Antriebsdrehmoment bereitgestellt werden. Über die Getriebeeinrichtung der Antriebseinheit sind der mindestens eine Elektromotor und die Abtriebswelle miteinander gekoppelt, sodass über eine mit einem Rad des Elektrofahrrads zu koppelnde Abtriebswelle der Antriebseinheit ein Drehmoment an ein Rad, üblicherweise ein Hinterrad des Elektrofahrrads, übertragen werden kann, das auf das erste und zweite Antriebsdrehmoment zurückgeht.

Regelmäßig werden bei derartigen Antriebseinheiten die Antriebswelle und die Abtriebswelle koaxial zueinander angeordnet. Die Abtriebswelle ist hierfür dann beispielsweise als Hohlwelle ausgeführt. Die Abtriebswelle ist dann aber vergleichsweise schwer und der Aufbau der Antriebseinheit ist vergleichsweise komplex. Zudem lässt sich ein kombiniertes, d.h., sich aus der Summe der muskelkraftbetätigt und fremdkraftbetätigt aufgebrachten Antriebsdrehmomente ergebendes Gesamtdrehmoment nicht ohne Weiteres sensorisch erfassen, beispielsweise aufgrund eines unterschiedlichen Krafteintrags an linken und rechten Ende der Antriebswelle, an denen die Pedale vorgesehen sind. Dies wird jedoch für eine vermeintlich kompaktere Bauform der Antriebseinheit in Kauf genommen.

Bei Antriebseinheiten für Elektrofahrräder, insbesondere Antriebseinheiten für sogenannte Mittelmotoren, besteht damit aber weiterhin Bedarf für verbesserte oder alternative Antriebseinheiten, beispielsweise Antriebseinheiten, bei denen Gewicht oder Kosten eingespart werden können.

Vor diesem Hintergrund sind die Antriebseinheit des Anspruchs 1 sowie das Steuerungsverfahren des Anspruchs 14 vorgeschlagen.

Die Erfindung ist definiert durch die unabhängigen Ansprüche 1 und 14, die bevorzugten Ausführungen durch die abhängigen Ansprüche.

Dokument EP 3 012 181 A1 zeigt die Präambel des Anspruchs 1.

Eine vorgeschlagene Antriebseinheit für ein Elektrofahrrad umfasst dabei wenigstens das Folgende:
- ein Abtriebselement zur Bereitstellung eines Drehmoments zum Antreiben des Elektrofahrrads,
- eine Antriebswelle für eine muskelkraftbetätigte Erzeugung eines ersten Antriebsdrehmoments durch einen Fahrer des Elektrofahrrads,
- einen Elektromotor zur fremdkraftbetätigten Erzeugung eines zweiten Antriebsdrehmoments an einer mit dem Elektromotor gekoppelten Rotorwelle und
- eine Getriebeeinrichtung zur Übertragung des zweiten Antriebsdrehmoments an das Abtriebselement.

Entsprechend der vorgeschlagenen Lösung ist das Abtriebselement drehfest mit der Antriebswelle verbunden. Ferner umfasst die Antriebseinheit wenigstens zwei räumlich zueinander beabstandete Signalgeber an einer das Abtriebselement und die Antriebswelle umfassenden Antriebsbaugruppe, über die im Betrieb der Antriebseinheit zwei zeitlich aufeinanderfolgende Messsignale erzeugbar sind, deren zeitlicher Abstand zueinander in Abhängigkeit davon variiert, wie hoch die ersten und zweiten Antriebsdrehmomente sind.

Die vorgeschlagene Lösung geht damit von dem Grundgedanken aus, zwei Signalgeber an einer Antriebsbaugruppe einer Antriebseinheit für ein Elektrofahrrad vorzusehen, bei der das Abtriebselement und die Antriebswelle drehfest miteinander verbunden sind, sodass die ersten und zweiten Antriebsdrehmomente (und damit ein sogenanntes Fahrermoment und ein Motormoment) auf dem Abtriebselement addiert werden, und wenigstens zwei Signalgeber zur Erzeugung von Messsignalen derart innerhalb einer solchen Antriebsbaugruppe vorzusehen, dass die von den Signalgebern erzeugten Messsignale in ihrem zeitlichen Abstand mit den Höhen der ersten und zweiten Antriebsmomente korrelieren respektive sich aus den Unterschieden in den zeitlichen Abständen zwischen den Messsignalen Rückschlüsse auf die Höhen der ersten und zweiten Antriebsmomente (absolut oder relativ zueinander) ziehen lassen. Der zeitliche Abstand der Messsignale der wenigstens zwei räumlich zueinander beabstandeten Signalgeber variiert somit in Abhängigkeit von den Höhen der ersten und zweiten Antriebsdrehmomente. Je nachdem, wie hoch die ersten und zweiten Antriebsdrehmomente absolut oder relativ zueinander sind, ergibt sich folglich ein anderer messbarer zeitlicher Abstand aufeinander folgender Messignale.

Bezogen auf eine Drehachse, um die die Antriebswelle und das hiermit drehfest verbundene, beispielsweise hieran drehfest fixierte oder einstückig hiermit ausgebildete Abtriebselement drehen, lässt sich somit eine Veränderung einer Phasenverschiebung zwischen den zwei mithilfe der Signalgeber bereitgestellter Messsignale auswerten. Hiermit kann elektronisch auf eine aktuelle Höhe eines (Gesamt-) Drehmoments zum Antreiben des Elektrofahrrads und/oder eine aktuelle Höhe des ersten Antriebsdrehmoments/Fahrermoments (absolut oder relativ) geschlossen und hierüber gegebenenfalls eine Steuerungsgröße bestimmt werden, mit der eine von dem Elektromotor bereitzustellende Unterstützungsleistung vorgegeben wird. So lässt sich über die ausgewertete Phasenverschiebung zwischen den Messsignalen beispielsweise bei bekanntem zweiten Antriebsmoment/Motormoment berechnen, wie hoch das erste muskelkraftbetätigte aufgebrachte Antriebsmoment/Fahrermoment ist. Auf dieser Basis kann dann eine Steuerungsgröße bestimmt werden, um die Unterstützungsleistung des Elektromotors anzupassen - beispielsweise in Abhängigkeit von einer nutzerseitig eingestellten Unterstützungsstufe.

In einer Ausführungsvariante sind die wenigstens zwei Signalgeber derart angeordnet, dass eine Veränderung des zeitlichen Abstands zwischen den von den Signalgebern erzeugten Messsignalen für eine elastische Verformung an der Antriebsbaugruppe infolge der erzeugten ersten und zweiten Antriebsdrehmomente repräsentativ ist. Die Antriebsbaugruppe mit den hieran vorgesehenen Signalgebern ist folglich derart ausgebildet, dass gezielt eine elastische Verformung an den Komponenten der Antriebsbaugruppe zugelassen und auswertet wird, wenn im Betrieb der Antriebseinheit zum Antreiben des Elektrofahrrads muskelkraftbetätigt und fremdkraftbetätigt erzeugte erste und zweite Antriebsmomente anliegen. Je nach Höhe des ersten Antriebsdrehmoments und des zweiten Antriebsdrehmoments variiert die Größe der elastischen Verformung und damit ein räumlicher Abstand zwischen den zwei Signalgebern. Diese Variation des räumlichen Abstands wiederum führt zu einer messbaren und auswertbaren Variation des zeitlichen Abstands, mit dem die über die die Signalgeber erzeugten Messsignalen erfasst werden.

Erfindungsgemäss ist vorgesehen, dass
- ein erster Signalgeber der wenigstens zwei Signalgeber an einer ersten Stelle a) an der Antriebswelle oder b) an einem der Antriebswelle zugeordneten Bereich des Abtriebselements vorgesehen ist und
- ein zweiter Signalgeber der wenigstens zwei Signalgeber an einer zweiten Stelle a) an einem der Getriebeeinrichtung zugeordneten Bereich des Antriebselements oder b) an einem einem Abtriebsrad des Abtriebselements zugeordneten Bereich des Abtriebselements vorgesehen ist.

Der erste Signalgeber ist hier folglich an einem Abschnitt der Antriebswelle oder einem antriebswellennahen Abschnitt des Abtriebselements vorgesehen, während der hierzu beabstandete zweite Signalgeber weiter abseits der Antriebswelle an dem Abtriebselement vorgesehen ist, mithin an einem Bereich des Abtriebselements, an dem das über den Elektromotor erzeugte zweite Antriebsdrehmoment anliegt oder in Richtung des Abtriebs weitergeleitet wird. Die zweite Stelle, an der der zweite Signalgeber vorgesehen ist, kann grundsätzlich bezogen auf eine Drehachse der Antriebswelle radial weiter außen liegen als die erste Stelle, an der der erste Signalgeber vorgesehen ist.

Je nach (Anbringungs-) Stelle, an der ein Signalgeber vorgesehen ist, insbesondere in Relation zu dem anderen Signalgeber, lassen sich unterschiedlich starke Veränderungen der zeitlichen Abstände zwischen den Signalen feststellen, da innerhalb der Antriebsbaugruppe zwischen den jeweiligen Abschnitten im Betrieb der Antriebseinheit unterschiedlich große elastische Verformungen auftreten können. So lassen sich beispielsweise je nach Position der wenigstens zwei Signalgeber innerhalb der Antriebsbaugruppe Phasenverschiebungen von (absolut) wenigstens 2° bis 4°, insbesondere im Bereich von 3° bis 5° beobachten respektive gezielt durch Auslegung der Antriebsbaugruppe und Einstellung einer bestimmten Torsionssteifigkeit zulassen.

Dies schließt Phasenverschiebungen im Bereich von -5° bis +5° ein. Negative Phasenverschiebungen können hierbei beispielsweise im Zuge einer Rekuperation oder einer Rückwärtsfahrt mit dem Elektrofahrrad auftreten. Insbesondere bei einem als sogenanntes Cargobike ausgebildeten Elektrofahrrad ist eine elektromotorisch unterstützte oder angetrieben Rückwärtsfahrt nicht untypisch.

Ein Abtriebsrad des Abtriebselements kann grundsätzlich zum Antreiben des Elektrofahrrads mit dem sich aus den ersten und zweiten Antriebsdrehmomenten ergebenden (Gesamt-) Drehmoment mit einem Kraftübertragungsglied verbunden sein, das für die Übertragung des Drehmoments an ein Hinterrad des Elektrofahrrads vorgesehen ist. Ein solches Kraftübertragungsglied kann beispielsweise eine Kette oder eine Riemen sein. Ein Abtriebsrad für eine Kette weist dann beispielsweise Zähne auf, die in die Kette eingreifen. Bei dem Abtriebsrad kann es sich folglich insbesondere um ein Abtriebszahnrad oder ein Abtriebsriemenrad handeln.

In einer Ausführungsvariante umfasst die Antriebseinheit zur Erzeugung des ersten und/oder zweiten Messignals mindestens einen Hall-Sensor. Ein Signalgeber kann in einem solchen Fall folglich durch einen Hall-Sensor an der Antriebsbaugruppe gebildet sein oder durch ein Magnetelement, das mit wenigstens einem stationären Hall-Sensor der Antriebsbaugruppe bei Drehung der Antriebswelle und des Abtriebselements zusammenwirkt, um beim Passieren des Hall-Sensors ein Messignal zu erzeugen. Grundsätzlich erlaubt die vorgeschlagene Lösung auf Basis von vergleichsweise einfach aufgebauten Signalgebern und hierüber erzeugter Messignale auf die Höhe der Antriebsdrehmomente zu schließen, insbesondere in einer Ausführungsvariante auf die Höhe eines muskelkraftbetätigt aufgebrachten ersten Antriebsdrehmoments/Fahrermoments. Die Verwendung eines Drehmomentsensors an der Antriebsbaugruppe ist somit beispielsweise nicht nötig. Dies gestattet folglich dann aber eine entsprechende Messung mit vergleichsweise geringen Kosten und zudem auf minimalem Bauraum. Bei der Verwendung von kostengünstigen und vergleichsweise kleinen Hall-Sensoren lassen sich diese Kostenvorteile weiter vergrößern.

In einer Ausführungsvariante umfasst die Antriebseinheit eine elektronische Steuereinheit, die eingerichtet ist, unter Nutzung der ersten und zweiten Messsignale sowie unter Nutzung eines für das zweiten Antriebsdrehmoment repräsentativen Signals eine für die Höhe des ersten Antriebsdrehmoments repräsentative Steuerungsgröße zu bestimmen. Bei dem für das zweite Antriebsdrehmoment repräsentativen Signal kann es sich beispielsweise um ein Messsignal oder Motorsignal des Elektromotors handeln, da das zweite Antriebsdrehmoment von dem Elektromotor aufgebracht wird. So lässt sich bei bekanntem zweitem Antriebsdrehmoments/Motormoment aus einem zeitlichen Abstand der ersten und zweiten Messsignale besonders einfach auf die Höhe des ersten Antriebsdrehmoments und damit auf eine Steuerungsgröße schließen, über die eine Steuerung des Elektromotors und damit eventuelle Anpassung der Höhe des zu erzeugenden zweiten Antriebsdrehmoments möglich ist. So soll einem Nutzer des Elektrofahrrads zum Beispiel gerade eine Unterstützungsleistung zum Antreiben des Elektrofahrrads zur Verfügung gestellt werden, die von seiner muskelkraftbetätigt aufgebrachten Leistung abhängt. Die elektronische Steuereinheit ist folglich in dieser Ausführungsvariante eingerichtet, eine für die Höhe des ersten Antriebsdrehmoments repräsentative Steuerungsgröße zu berechnen. Hierbei kann die Steuerungsgröße ein für die Steuerung des Elektromotors noch weiter zu verarbeitender Wert oder ein unmittelbar zur Steuerung des Elektromotors nutzbares Steuerungssignal sein.

Beispielsweise ist in diesem Zusammenhang die elektronische Steuereinheit konfiguriert, für die Bestimmung der Steuerungsgröße wenigstens einen für die Torsionssteifigkeit der Antriebsbaugruppe, der Antriebswelle und/oder des Abtriebselements repräsentativen, in einem Speicher hinterlegten Steifigkeitswert zu nutzen. So kann insbesondere in einem Speicher der Steuereinheit ein entsprechender Steifigkeitswert hinterlegt sein. Der hinterlegte Steifigkeitswert ist dann folglich eine Steifigkeitskonstante, der für die jeweilige Torsionssteifigkeit repräsentativ ist. Insbesondere kann eine solche Steifigkeitskonstante nach Durchführung eines Kalibrierungsprozesses für die Antriebseinheit ermittelt und abgespeichert worden sein. Bei bekannter Torsionssteifigkeit der oder zumindest innerhalb der Antriebsbaugruppe lässt sich anhand einer Veränderung einer Phasenverschiebung zwischen den Messsignalen der wenigstens zwei Signalgeber auf eine verformungsbedingte Veränderung eines räumlichen Abstand zwischen den zweiten Signalgebern und damit auf die Höhen der anliegenden Antriebsdrehmomente schließen, mit denen die Verformung einhergeht.

In einer Ausführungsvariante umfasst das Abtriebselements wenigstens ein Federelement, das eine elastische Verformbarkeit des Abtriebselements in wenigstens einem Abschnitt des Abtriebselements vorgibt, an dem einer der Signalgeber vorgesehen ist. Über das wenigstens eine Federelement wird somit gezielt eine Elastizität vorab definierter Größe in das Abtriebselement eingebracht, beispielsweise um eine bestimmte Verformbarkeit an einem Abschnitt des Abtriebselements in einem bestimmten Maß zuzulassen. Das wenigstens eine Federelement kann hierbei zwei Abschnitte des Abtriebselements entsprechend elastisch miteinander verbinden. Alternativ kann das wenigstens eine Federelement auch in das Material des Abtriebselements integriert, insbesondere eingespritzt sein.

Über den wenigstens einen entgegen einer Rückstellkraft des wenigstens einen Federelements elastisch verformbaren Abschnitt des Abtriebselements, an dem einer der Signalgeber vorgesehen ist, wird somit eine räumliche Lageveränderung bezüglich des anderen Signalgebers beim Betrieb der Antriebseinheit gezielt zugelassen, und zwar in einem Maße, sodass mit einer räumlichen Lageveränderung auch eine signifikante, messbare Veränderung der zeitlichen Abfolge der Messignale einhergeht, wenn die sich mit der Antriebsbaugruppe drehenden Signalgeber an wenigstens einem stationären Sensorteil (wie einem Hall-Sensor) der Antriebseinheit vorbei geführt werden.

Um einen über das wenigstens eine Federelement vorgegebenen Verformungsweg für eine im Betrieb der Antriebseinheit auftretende elastische Verformung auf ein als zulässig eingestuftes Maß - auch beispielsweise im Hinblick auf die Vermeidung einer plastischen und damit irreversiblen Verformung - zu erreichen, kann die Antriebsbaugruppe in einer Weiterbildung eine Blockmechanik umfassen. Eine solche Blockmechanik kann insbesondere an dem Abtriebselement selbst integriert sein. Die Blockmechanik begrenzt eine über das wenigstens eine Federelement vorgegebene elastische Verformbarkeit des wenigstens einen den einen Signalgeber tragenden Abschnitts des Abtriebselements auf einen vordefinierten maximalen Verformungsweg. Auf diese Art und Weise wird erreicht, dass sich ein Abschnitt des Abtriebselements, an dem ein Signalgeber vorgesehen ist, (bei hieran angreifender, von den wenigstens einen Federelement aufgebrachter Rückstellkraft) im Betrieb der Antriebseinheit und für das Antreiben des Elektrofahrrads erzeugten ersten und zweiten Antriebsdrehmoments nur bis zu dem maximalen Verformungsweg und dabei insbesondere relativ zu dem anderen Signalgeber verformen kann. So ist ein beispielsweise ein bezüglich der Drehachse der Antriebswelle maximaler Verformungswinkel über die Blockmechanik vorgegeben sein. Ab Überbrücken des maximalen Verformungswegs sperrt folglich die Blockmechanik eine weitere Verformung des Abschnitts und begrenzt damit mechanisch die Verformbarkeit des den einen Signalgeber tragenden Abschnitts. Die Verformbarkeit des einen der Signalgeber tragenden Abschnitts ist hierbei beispielsweise derart eingestellt, dass eine elastische Verformung in einem bestimmten Betriebsbereich der Antriebseinheit auftritt, in dem ein Fahrer des Elektrofahrrads mit einer unterhalb eines Schwellwerts liegenden Kraft in mit der Antriebswelle verbundene Pedale tritt und damit ein unterhalb eines Momentenschwellwerts liegendes erstes Antriebsdrehmoment an der Antriebswelle erzeugt.

Ein solcher Momentenschwellwert liegt beispielsweise bei 30 Nm. Der Momentenschwellwert ist hierbei beispielsweise derart gewählt, dass der Betriebsbereich einer typischen Normalfahrt des Elektrofahrrads mit einer Durchschnittsgeschwindigkeit im Bereich von 5-25 km je Stunde entspricht. Unterhalb des Momentenschwellwerts ist folglich vorgesehen, dass der Antriebsbaugruppe eine größere elastische Verformbarkeit innewohnt, wodurch die hierüber elektronisch auswertbaren Veränderungen in den zeitlichen Abständen der Messsignale vergleichsweise groß werden. Im Bereich eines muskelkraftbetätigt aufgebrachten Antriebsdrehmoments von 0 bis 30 Nm liegt damit eine vergleichsweise geringe Torsionssteifigkeit der Antriebsbaugruppe vor und das bereitgestellte Messsystem ist vergleichsweise sensibel. Damit lässt sich motorseitig eine fein abgestufte Unterstützungsleistung bereitstellen, bei der beispielsweise die muskelkraftbetätigt aufgebrachte Leistung um den Faktor 3 oder 4 vergrößert wird. Oberhalb des Momentenschwellwerts wird wiederum eine maximal mögliche Unterstützungsleistung durch den wenigstens einen Motor zur Verfügung gestellt. Hier kommt es somit auf eine weitergehende Auswertung der Messsignale nicht mehr zwingend an.

Bei einer oberhalb des Momentenschwellwerts liegenden Kraft, mit der der Fahrer des Elektrofahrrads in die Pedale tritt, wird von einem atypischen Fahrzustand respektive Betriebsbereich ausgegangen, zum Beispiel einer Sprint- oder Testfahrt. Hierfür kann die Unterstützungsleistung des Elektromotors auf einen Maximalwert geregelt sein und die über die Signalgeber ausgewerteten Drehmomente müssen hier nicht zwingend eine feinstufige Anpassung steuern. Dementsprechend kann hier der Blockmechanismus aktiv sein. Ab dem maximalen Verformungsweg, der über den Blockmechanismus vorgegeben ist, wird folglich von einem Fahrzustand des Elektrofahrrads ausgegangen, bei dem ein Fahrer des Elektrofahrrads mit einer einen (Kraft-) Schwellwert übersteigenden Kraft in die Pedale tritt und damit der Elektromotor zum Bereitstellen einer bestimmten, festen Unterstützungsleistung anzusteuern ist.

Die Getriebeeinrichtung der Antriebseinheit kann grundsätzlich wenigstens ein Getrieberad, insbesondere ein Getriebezahnrad oder ein Getrieberiemenrad, umfassen, das über die Rotorwelle antreibbar ist und zur Übertragung des zweiten Antriebsdrehmoments an das Abtriebselements vorgesehen ist. Dabei kann auch das Getrieberad drehfest mit dem Abtriebselements verbunden sein. Dies schließt insbesondere die Möglichkeit ein, dass das Abtriebselement mit einem hieran integrierten Getrieberad und einem hieran integrierte Abtriebsrad einstückig mit der Antriebswelle ausgebildet ist.

Im Fall eines Getriebezahnrads weist folglich die Getriebeeinrichtung wenigstens ein weiteres Zahnrad auf, das mit dem drehfest mit dem Abtriebselement verbundenen Getriebezahnrad kämmt, um das zweite Antriebsdrehmoment an das Abtriebselement zu übertragen. Bei einer Ausführungsvariante mit einem Getrieberiemenrad (z.B. in Form einer Riemenscheibe) ist die Getriebeeinrichtung mit wenigstens einem Riemenelement, zum Beispiel in Form eines Keilriemens oder Zahnriemens, ausgebildet, um das zweite Antriebsdrehmoment an das Abtriebselement zu übertragen.

Grundsätzlich kann das Getrieberad beispielsweise für die drehfeste Verbindung mit dem Abtriebselement an dem Abtriebselement selbst ausgebildet sein. Dies schließt folglich ein, dass ein das Getrieberad bildender Abschnitt mit einem Träger- oder Stegabschnitt des Antriebselements stoffschlüssig verbunden ist. Alternativ kann das an dem Abtriebselement ausgebildete Getrieberad auch einstückig mit einem Träger- oder Stegabschnitt des Abtriebselements ausgebildet sein. Insbesondere kann das Getrieberad in einer Ausführungsvariante mit einem Abtriebsrad des Antriebselements einstückig ausgebildet sein, das für die Übertragung des sich aus den ersten und zweiten Antriebsdrehmomenten ergebenden Drehmoments vorgesehen ist. An dem Abtriebselement sind in einer solchen Ausführungsvariante folglich ein Getrieberad und ein Abtriebsrad Bestandteile ein und desselben Bauteils. Hierüber ist die Komplexität der Antriebseinheit weiter reduziert und im Übrigen auch eine Montage der Antriebseinheit vereinfacht. Das Abtriebsrad kann beispielsweise ebenfalls als Abtriebszahnrad oder als Abtriebsriemenrad ausgebildet sein.

Grundsätzlich kann das Abtriebselement ein Abtriebsrad umfassen, das zum Antreiben des Elektrofahrrads mit einem Kraftübertragungsglied der Antriebseinheit verbunden ist. Ein solches Kraftübertragungsglied stellt dann eine Kopplung zu einem Hinterrad des Elektrofahrrad her, sodass über das sich drehende Abtriebsrad ein sich aus den ersten und zweiten Antriebsdrehmomenten ergebendes Drehmoment zum Antreiben des Elektrofahrrads von dem Abtriebselement an das Hinterrad des Elektrofahrrads übertragen werden kann.

In einer Ausführungsvariante ist das Abtriebselement an der Antriebswelle selbst ausgeformt. Das Abtriebselement ist hier beispielsweise einstückig mit der Antriebswelle ausgebildet, sodass die Antriebswelle und das Abtriebselement Teile respektive Abschnitte eines einzelnen Bauteils sind. Alternativ kann das Abtriebselement an der Antriebswelle drehfest fixiert sein, sodass Antriebswelle und Abtriebselement eine wenigstens zweiteilige Antriebsbaugruppe bilden, bei der das separat gefertigte Abtriebselement unmittelbar an der Antriebswelle drehfest festgelegt ist. Beide vorstehend erläuterten Varianten bieten dabei den Vorteil, dass keine koaxial zu der Antriebswelle zu lagernde Abtriebswelle vorgesehen werden muss, insbesondere keine koaxial gelagerte Hohlwelle.

Die Antriebseinheit kann grundsätzlich ein Gehäuse umfassen, in dem der Elektromotor aufgenommen ist und die Antriebswelle drehbar gelagert ist. Dabei kann das Abtriebselement an einer Gehäuseöffnung des Gehäuses drehbar gelagert sein. Dies schließt insbesondere ein, dass ein Abtriebsrad des Antriebselements an der Gehäuseöffnung drehbar gelagert ist.

Mit der unmittelbaren drehbaren Lagerung eines mit einem Übertragungsglied verbundenen Abtriebsrads an der Gehäuseöffnung kann dabei auch einhergehen, dass die Antriebseinheit vollständig ohne Abtriebswelle auskommt. So kann hier dann beispielsweise das Getrieberad einstückig mit dem Abtriebsrad ausgebildet sein, wobei dann ein kreiszylindrischer Abschnitt des Abtriebsrads die drehbare Lagerung an dem Gehäuse der Antriebseinheit übernimmt.

Die vorgeschlagene Lösung betrifft ferner ein Elektrofahrrad mit einer Ausführungsvariante einer vorgeschlagenen Antriebseinheit.

Ein weiterer Aspekt der vorgeschlagenen Lösung betrifft ein Steuerungsverfahren zur Steuerung wenigstens eines Elektromotors einer Antriebseinheit für eine Elektrofahrrad. Eine Antriebseinheit eines im Rahmen des vorgeschlagenen Steuerungsverfahrens zu steuernder Elektromotors umfasst dabei wenigstens das Folgende:
- eine Antriebswelle für eine muskelkraftbetätigte Erzeugung eines ersten Antriebsdrehmoments durch einen Fahrer des Elektrofahrrads,
- ein mit der Antriebswelle drehfest verbundenes Abtriebselement zur Bereitstellung eines Drehmoments zum Antreiben des Elektrofahrrads,
- den wenigstens einen Elektromotor zur fremdkraftbetätigten Erzeugung eines zweiten Antriebsdrehmoments an einer mit dem Elektromotor gekoppelten Rotorwelle,
- eine Getriebeeinrichtung zur Übertragung des zweiten Antriebsdrehmoments an das Abtriebselement und
- wenigstens zwei räumlich zueinander beabstandete Signalgebern an einer das Abtriebselement und die Antriebswelle umfassenden Antriebsbaugruppe, über die im Betrieb der Antriebseinheit zwei zeitlich aufeinanderfolgende Messsignale erzeugbar sind, deren zeitlicher Abstand zueinander in Abhängigkeit davon variiert, wie hoch die ersten und zweiten Antriebsdrehmomente sind.

Ein vorgeschlagenes Steuerungsverfahren verwendet dann zur Steuerung des wenigstens einen Elektromotors eine aus den ersten und zweiten Messsignalen bestimmte Steuerungsgröße.

Die Steuerung schließt dabei eine eventuelle Anpassung der Höhe des mit dem wenigstens einen Elektromotors zu erzeugenden zweiten Antriebsdrehmoments ein.

Ausführungsvarianten eines vorgeschlagenen Steuerungsverfahrens können insbesondere unter Nutzung von Ausführungsvarianten einer vorgeschlagenen Antriebseinheit umgesetzt werden. Vorstehend und nachstehend im Zusammenhang mit Ausführungsvarianten einer vorgeschlagenen Antriebseinheit erläuterte Merkmale und Vorteile gelten somit auch für entsprechende Ausführungsvarianten eines vorgeschlagenen Steuerungsverfahrens und umgekehrt.

Insbesondere kann im Rahmen einer Ausführungsvariante eines vorgeschlagenen Steuerungsverfahrens für die Bestimmung der Steuerungsgröße zusätzlich wenigstens ein für das zweite Antriebsdrehmoment repräsentatives (Mess- oder Motor-) Signal und/oder wenigstens ein für die Torsionssteifigkeit der Antriebsbaugruppe, der Antriebswelle und/oder des Antriebselement repräsentativer Steifigkeitswert verwendet werden. Der wenigstens eine Steifigkeitswert kann hierbei beispielsweise bei einer Kalibrierung der Antriebseinheit (d. h. einem mit der Antriebseinheit durchgeführten Kalibrierungsprozess) bestimmt und in einem Speicher gespeichert werden.

Die beigefügten Figuren veranschaulichen exemplarisch mögliche Ausführungsvarianten der vorgeschlagenen Lösung.

Hierbei zeigen:
- Figur 1: schematisch eine erste Ausführungsvariante einer vorgeschlagenen Antriebseinheit für ein Elektrofahrrad, bei der eine Antriebswelle einstückig mit einem Abtriebselement ausgebildet ist, das ein Getriebezahnrad und ein Abtriebsrad integriert und an dem zwei zueinander radial versetzte Signalgeber für die Bestimmung eines muskelkraftbetätigt aufgebrachten ersten Antriebsdrehmoments (Fahrermoment) vorgesehen sind;
- Figur 2: eine Weiterbildung der Ausführungsvariante der Figur 1, bei der die Signalgeber an dem Abtriebselement abweichend zueinander positioniert sind;
- Figur 3: eine Weiterbildung der Ausführungsvariante der Figur 2, bei der wenigstens ein Federelement an dem Abtriebselements vorgesehen ist, um eine elastische Verformung im Betrieb der Antriebseinheit vorzugeben und, im Zusammenspiel mit einer Blockmechanik, auf ein vordefinierte Maß zu begrenzen;
- Figur 4: ein Elektrofahrrad mit einer Ausführungsvariante einer vorgeschlagenen Antriebseinheit.

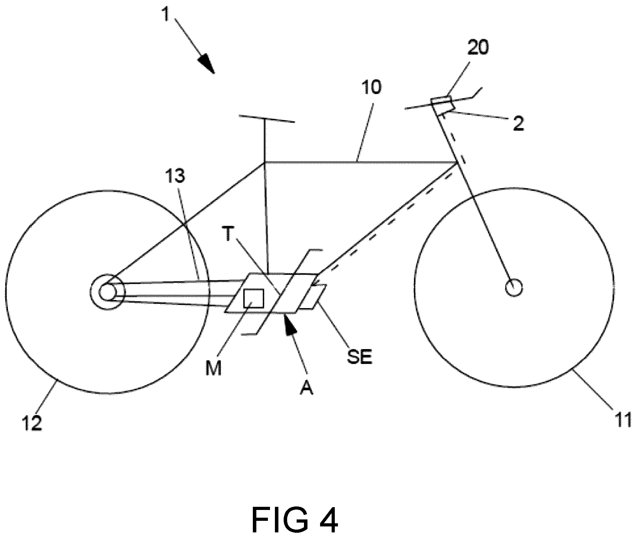

Die Figur 4 zeigt exemplarisch ein Elektrofahrrad 1, mit einem Rahmen 10, an dem ein Vorderrad 11 und ein Hinterrad 12 drehbar gelagert sind. Das Hinterrad 12 ist über eine Antriebseinheit A elektromotorisch unterstützt antreibbar. Hierfür weist die Antriebseinheit A wenigstens einen Elektromotor M auf. Ein von dem Elektromotor M erzeugtes Antriebsdrehmoment ist dabei - gegebenenfalls zusätzlich zu einem muskelkraftbetätigt über eine Antriebswelle/Tretlagerwelle T aufgebrachtes Antriebsdrehmoment - mithilfe eines Kraftübertragungsglieds, zum Beispiel in Form einer Kette oder eines Riemens, an das Hinterrad 12 übertragbar. An das Hinterrad 12 kann derart nicht nur ein erstes Antriebsdrehmoment übertragen werden, das über mit der Tretlagerwelle T verbundene Pedale von einem Fahrer des Elektrofahrrads 1 aufgebracht wird. Vielmehr kann das Hinterrad 12 auch über ein zweites Antriebsdrehmoment angetrieben werden, das von dem Elektromotor M erzeugt wird.

Eine von dem Elektromotor M aufgebrachte Antriebsleistung wird dabei über eine elektronische Steuereinheit SE der Antriebseinheit A vorgegeben. Diese elektronische Steuereinheit SE gibt beispielsweise in Abhängigkeit von nutzerseitig ausgewählten Unterstützungsstufen die elektromotorisch aufzubringende Antriebsleistung vor, mit der ein Fahrer des Elektrofahrrads 1 beim Treten in die Pedale unterstützt wird, vor. Eine entsprechende Unterstützungsstufe wird dann beispielsweise über eine Betätigungseinheit 2 vorgegeben. Diese mit der Steuereinheit SE gekoppelte Betätigungseinheit 2 ist bei dem Elektrofahrrad 1 der Figur 5 an einem Lenker des Elektrofahrrads 1 vorgesehen und mit einem Display 20 ausgestattet.

Im Unterschied zu bisher in der Praxis üblichen Konstruktionen ist bei der Antriebseinheit A der vorgeschlagenen Lösung eine drehfeste Kopplung eines mit dem Kraftübertragungsglied 13 verbundenen Abtriebselements 4 mit der Tretlagerwelle T vorgesehen.

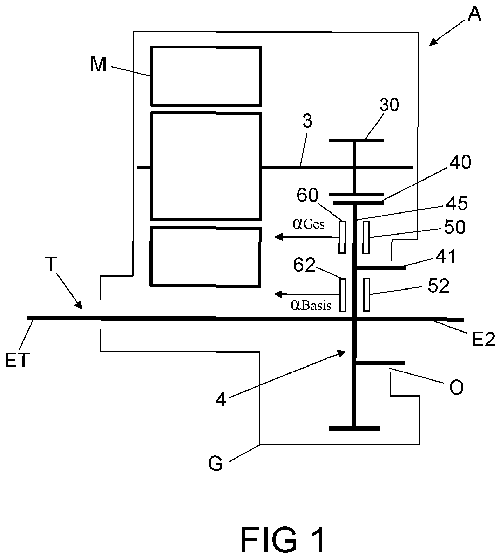

Bei einer Ausführungsvariante der Figur 1 ist hierfür beispielsweise vorgesehen, dass die Tretlagerwelle T einstückig mit dem Abtriebselement 4 ausgebildet ist. Das Abtriebselement 4 ist dabei innerhalb eines Gehäuses G der Antriebseinheit A untergebracht, aus dem beidseitig die Tretlagerwelle T vorsteht, sodass an aus dem Gehäuse G vorstehenden Wellenenden E1, E2 jeweils ein Pedal mit der Tretlagerwelle T verbunden werden kann. Das Abtriebselement 4 bildet ferner ein Abtriebsrad, beispielsweise in Form eines Abtriebsriemenrads oder - wie in der Figur 1 gezeigt - in Form eines Abtriebszahnrads 41 aus, mit dem das Kraftübertragungsglied 13 verbunden ist. Ferner kämmt vorliegend ein Getriebezahnrad 40, als Teil einer einstufigen Getriebeeinrichtung, mit einem Antriebszahnrad 30, das drehfest mit einer Rotorwelle 3 des Elektromotors M verbunden ist. Indem das Getriebezahnrad 40 integraler Bestandteil des Antriebselements 4 ist, kann ein von dem Elektromotor M erzeugtes (zweites) Antriebsdrehmoment in das Abtriebselement 4 eingeleitet werden kann. Damit erfolgt an dem Abtriebselement 4 eine Addition eines ersten muskelkraftbetätigt an der Tretlagerwelle T aufgebrachten Antriebsdrehmoments und des zweiten elektromotorisch aufgebrachten Antriebsdrehmoments und die Bereitstellung eines sich hieraus ergebenden Gesamtdrehmoments an dem Abtriebszahnrad 41. Das Abtriebszahnrad 41, an dem die addierten Antriebsdrehmomente anliegen, ist hierbei in einer Gehäuseöffnung O des Gehäuses G drehbar gelagert.

An einem sich radial bezüglich der Drehachse der Tretlagerwelle T nach außen erstreckenden Stegabschnitt 45 des Abtriebselements 4 sind radial zueinander versetzt zwei Signalgeber in Form von Magnetelementen 52 und 50 für Hall-Sensoren 62, 60 der Antriebseinheit A vorgesehen. Bei einer Drehung der Tretlagerwelle T und damit des drehfest hiermit verbundenen Abtriebselements 4 werden die Magnetelemente 50 und 52 an den Hall-Sensoren 60 und 62 vorbeigeführt und erzeugen dabei Messsignale, die mit der Drehgeschwindigkeit der mit der Tretlagerwelle T und dem Abtriebselements 4 definierten Antriebsbaugruppe korrelierten und mithin Winkelsignale darstellen.

Das eine Magnetelement 52 ist vorliegend im Bereich der Tretlagerwelle T vorgesehen, während das andere Magnetelement 50 im Bereich des Getriebezahnrads 40 positioniert ist. Durch die entsprechende Positionierung der beiden Magnetelemente 52 und 50 sowie eine entsprechend ausgelegte Torsionssteifigkeit der Antriebsbaugruppe lässt sich bei einstückiger Ausbildung der Tretlagerwelle T mit dem Abtriebselements 4 beobachten, dass in Abhängigkeit von der Höhe der Antriebsdrehmomente und insbesondere der Höhen der Antriebsdrehmomente relativ zueinander eine elastische Verformung an dem Stegabschnitt 45 auftritt. Diese elastische Verformung hat eine Veränderung der räumlichen Lage der Magnetelemente 52 und 50 zueinander zur Folge, die auch Auswirkungen auf die bei Drehung der Tretlagerwelle T und des Abtriebselements 4 erfassten Messsignale hat, die über die Magnetelemente 52 und 50 an den Hall-Sensoren 62 und 60 erzeugt werden. So lässt sich beobachten, dass ein zeitlicher Abstand zwischen den erzeugten Messsignalen in Abhängigkeit davon variiert, wie hoch die ersten und zweiten Antriebsdrehmomente absolut oder relativ zueinander sind.

Hiermit kann sich dann beispielsweise zunutze gemacht werden, dass die Torsionssteifigkeit der Antriebsbaugruppe bekannt ist, beispielsweise durch Auslegung und/oder als Resultat eines zuvor durchgeführten Kalibrierungsprozesses mit der Antriebseinheit A, und zudem im Betrieb der Antriebseinheit A das von dem Elektromotor M an der Rotorwelle 3 erzeugte zweite Antriebsdrehmoment ebenfalls bekannt ist. Aus dem Auftreten oder einer Veränderung einer Phasenverschiebung der an den Hall-Sensoren 62 und 60 erzeugten Mess- respektive Winkelsignale lässt sich derart das muskelkraftbetätigt aufgebrachte erste Antriebsdrehmoment, mithin das sogenannte Fahrermoment, errechnen. Eine auf Basis dieses errechneten Antriebsdrehmoments bestimmte Steuerungsgröße kann der elektronischen Steuereinheit SE zur Verfügung gestellt werden, um die von dem Elektromotor M aufzubringende Unterstützungsleistung zu steuern. Im vorliegenden Fall werden hierzu von den Hall-Sensoren erzeugte Messsignale α_{Ges} und α_{Basis} an die elektronische Steuereinheit SE übertragen, die über eine integrierte elektronische Auswertelogik auf das derzeit anliegende Fahrermoment und hieraus wiederum auf die Steuerungsgröße zur Steuerung des Elektromotors M schließt.

Die differenzielle Messung mithilfe der zeitlichen Abstände zwischen den Messignalen α_{Ges} und α_{Basis} der Hall-Sensoren 62 und 60, um auf das Fahrermoment zu schließen, lässt sich vergleichsweise kostengünstig und unter Nutzung von wenig Bauraum realisieren. Dabei ist die Messung auch ohne temperaturbedingte Schwankungen der Motoreinflüsse möglich. Darüber hinaus ist aufgrund der radialen Beabstandung der Magnetelemente 52 und 50 eine vergleichsweise große Messauflösung und damit eine gute Präzision gegeben.

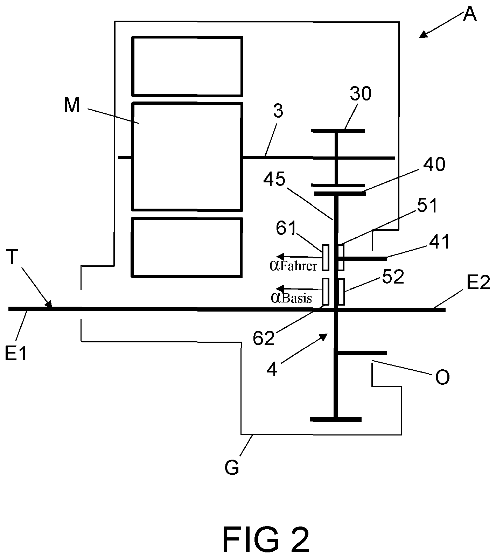

Bei der Ausführungsvariante der Figur 2 ist ein radial weiter außen liegendes Magnetelement 51 im Bereich des Abtriebszahnrads 41 und damit - im Vergleich zu dem Magnetelement 52 der Figur 1 näher an der Tretlagerwelle T - positioniert. Hier wird das Fahrermoment aus einer differenzielle Messung von Mess- respektive Winkelsignalen α_{Fahrer} und α_{Basis} von Hallsensoren 61 und 60 ermittelt. Die entsprechende Messstrecke fokussiert sich dann folglich stärker auf den Einfluss des aufgebrachten Fahrermoments. Der geringere radiale Abstand führt zudem zu einer geringeren Verdrehung der Magnetelemente 52 und 51 als bei den Magnetelementen 52 und 50 der Figur 1. So kann beispielsweise bei einem typischen Aufbau der Antriebseinheit A als Mittelmotor für das Elektrofahrrad 1 ein maximaler Verformungsweg in Form eines maximalen Verdrehwinkels bei der Ausführungsvariante der Figur 1 bis zu ±5° bei der Ausführungsvariante der Figur 2 bis zu ±3° betragen.

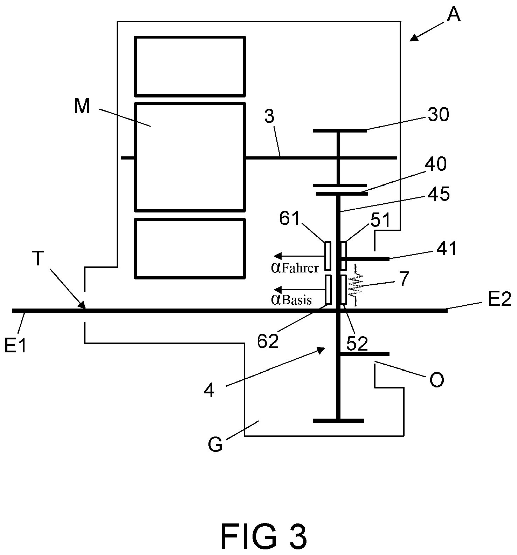

Bei der Weiterbildung der Figur 3 wird die Elastizität an dem Stegabschnitt 45 durch ein Federelement 7 im Kraftfluss des ersten Antriebsdrehmoments erhöht und darüber hinaus durch eine Blockmechanik und mithin eine mechanische Verdrehsicherung auf einen Maximalwert begrenzt. So ist über das Federelement 7 gezielt eine vorgegebene elastische Verformbarkeit des Abtriebselements 4 in dem Stegabschnitt 45 vorgegeben und damit eine vergleichsweise große Verlagerbarkeit des dem Abtriebszahnrad 41 zugeordnete Magnetelements 51 (bezüglich der Drehachse der Tretlagerwelle T) relativ zu dem der Tretlagerwelle T zugeordneten Magnetelement 52. Die Blockmechanik an dem Stegabschnitt 45 stellt dabei sicher, dass eine über das wenigstens eine Federelement 7 vorgegebene elastische Verformbarkeit des Stegabschnitts 45 auf einen vordefinierten maximalen Verformungsweg begrenzt wird. Überschreitet ein von einem Fahrer des Elektrofahrrads 1 aufgebrachte Kraft, mit der der Fahrer in an den Wellenenden E1 und E2 angebrachte Pedale tritt, einen Schwellwert und erzeugt damit ein oberhalb eines Momentenschwellwerts liegendes erstes Antriebsdrehmoment, ist über die Blockmechanik sichergestellt, dass sich das Magnetelement 51 (oder in einer analogen Weiterbildung auf Basis der Ausführungsvariante der Figur 1 das Magnetelement 50) nicht über einen maximalen Verdrehwinkel hinaus relativ zu dem der Tretlagerwelle T zugeordneten Magnetelement 52 verlagern kann.

Die über das Federelement 7 (oder weitere Federelemente) vorgegebene elastische Verformbarkeit deckt dabei dann beispielsweise einen Normalbetrieb der Antriebseinheit A ab, in dem ein Fahrer des Elektrofahrrads 1 nicht übermäßig stark in die Pedale tritt. Bei einer Sprintfahrt oder einer Testfahrt, bei der dann mit über einen Schwellwert hinausgehender Kraft in die Pedale getreten wird, tritt keine (messbare) Veränderung zwischen den zeitlichen Abständen der α_{Fahrer} und α_{Basis} (α_{Ges} und α_{Basis}) auf und die errechnete Steuerungsgröße für die Steuerung des Elektromotors wird somit auf einen gleich bleibenden festen Wert eingestellt.

### Bezugszeichenliste

- 1: Elektrofahrrad
- 10: Rahmen
- 11: Vorderrad
- 12: Hinterrad
- 13: Kraftübertragungsglied
- 2: Betätigungseinheit
- 20: Display
- 3: Rotorwelle
- 30: Antriebszahnrad
- 4: Abtriebselement
- 40: Getriebezahnrad
- 41: Abtriebszahnrad
- 45: Stegabschnitt
- 50, 51, 52: Magnetelement (Signalgeber)
- 60, 61, 62: Hall-Sensor
- 7: Federelement
- A: Antriebseinheit
- E1, E2: Wellenende
- G: Gehäuse
- M: Elektromotor
- O: Gehäuseöffnung
- SE: Elektronische Steuereinheit
- T: Tretlager- / Antriebswelle
- α_{Ges}, α_{Fahrer}, α_{Basis}: Mess- / Winkelsignal

## Patentansprüche

1. Antriebseinheit für ein Elektrofahrrad (1), mit
- einem Abtriebselement (4) zur Bereitstellung eines Drehmoments zum Antreiben des Elektrofahrrads (1),
- einer Antriebswelle (T) für eine muskelkraftbetätigte Erzeugung eines ersten Antriebsdrehmoments durch einen Fahrer des Elektrofahrrads (1),
- einem Elektromotor (M) zur fremdkraftbetätigten Erzeugung eines zweiten Antriebsdrehmoments an einer mit dem Elektromotor (M) gekoppelten Rotorwelle (3) und
- einer Getriebeeinrichtung (30, 40) zur Übertragung des zweiten Antriebsdrehmoments an das Abtriebselement (4),
**dadurch gekennzeichnet, dass**
das Abtriebselement (4) drehfest mit der Antriebswelle (T) verbunden ist und die Antriebseinheit (A) wenigstens zwei räumlich zueinander beabstandete Signalgeber (50, 52; 50, 51) an einer das Abtriebselement (4) und die Antriebswelle (T) umfassenden Antriebsbaugruppe umfasst, über die im Betrieb der Antriebseinheit (A) zwei zeitlich aufeinanderfolgende Messsignale (α_{Basis,} α_{Ges}; α_{Basis,} α_{Fahrer}) erzeugbar sind, deren zeitlicher Abstand zueinander in Abhängigkeit davon variiert, wie hoch die ersten und zweiten Antriebsdrehmomente sind, wobei
- ein erster Signalgeber (52) der wenigstens zwei Signalgeber (50, 52; 50, 51) an einer ersten Stelle a) an der Antriebswelle (T) oder b) an einem der Antriebswelle (T) zugeordneten Bereich des Abtriebselements (4) vorgesehen ist und
- ein zweiter Signalgeber (50, 51) der wenigstens zwei Signalgeber (50, 52; 50, 51) an einer zweiten Stelle an einem der Getriebereinrichtung (30, 40) zugeordneten Bereich des Abtriebselements (4) vorgesehen ist.

2. Antriebseinheit nach Anspruch 1, **dadurch gekennzeichnet, dass** die wenigstens zwei Signalgeber (50, 52; 50, 51) derart angeordnet sind, dass eine Veränderung des zeitlichen Abstands zwischen den von den Signalgebern (50, 52; 50, 51) erzeugten Messsignalen (α_{Basis,} α_{Ges}; α_{Basis,} α_{Fahrer}) für eine elastische Verformung an der Antriebsbaugruppe infolge der erzeugten ersten und zweiten Antriebsdrehmomente repräsentativ ist.

3. Antriebseinheit nach Anspruch 1 oder 2, **dadurch gekennzeichnet, dass** die zweite Stelle, bezogen auf eine Drehachse der Antriebswelle (T), radial weiter außen liegt als die erste Stelle.

4. Antriebseinheit nach einem der vorhergehenden Ansprüche, **dadurch gekennzeichnet, dass**
- die Antriebseinheit (A) zur Erzeugung des ersten und/oder zweiten Messsignals (αBasis, αGes; αBasis, αFahrer) mindestens einen Hall-Sensor (60, 61, 62) umfasst und/oder
- die Antriebseinheit (A) eine elektronische Steuereinheit (SE) umfasst, die eingerichtet ist, unter Nutzung der ersten und zweiten Messsignale (α_{Basis,} α_{Ges}; α_{Basis,} α_{Fahrer}) sowie unter Nutzung eines für das zweite Antriebsdrehmoment repräsentativen Signals eine für die Höhe des ersten Antriebsdrehmoments repräsentative Steuerungsgröße zu bestimmen, wobei optional die elektronische Steuereinheit (SE) konfiguriert ist, für die Bestimmung der Steuerungsgröße wenigstens einen für die Torsionssteifigkeit der Antriebsbaugruppe, der Antriebswelle (T) und/oder des Abtriebselements (4) repräsentativen, in einem Speicher hinterlegten Steifigkeitswert zu nutzen.

5. Antriebseinheit nach einem der vorhergehenden Ansprüche, **dadurch gekennzeichnet, dass** das Abtriebselement (4) wenigstens ein Federelement (7) umfasst, das eine elastische Verformbarkeit des Abtriebselements (4) in wenigstens einem Abschnitt (45) des Abtriebselements (4) vorgibt, an dem einer der Signalgeber (60, 62; 61, 62) vorgesehen ist, wobei optional die Antriebsbaugruppe eine Blockmechanik umfasst, die eine über das wenigstens eine Federelement (7) vorgegebene elastische Verformbarkeit des wenigstens einen Abschnitts (45) des Abtriebselements (4) auf einen vordefinierten maximalen Verformungsweg begrenzt.

6. Antriebseinheit nach einem der vorhergehenden Ansprüche, **dadurch gekennzeichnet, dass** die Getriebeeinrichtung (30, 40) wenigstens ein Getrieberad (40) umfasst, das über die Rotorwelle (3) antreibbar ist und zur Übertragung des zweiten Antriebsdrehmoments an das Abtriebselement (4) vorgesehen ist.

7. Antriebseinheit nach Anspruch 6, **dadurch gekennzeichnet, dass** das Getrieberad (40) drehfest mit dem Abtriebselement (4) verbunden ist.

8. Antriebseinheit nach Anspruch 7, **dadurch gekennzeichnet, dass** das Getrieberad (40) an dem Abtriebselement (4) ausgebildet ist.

9. Antriebseinheit nach Anspruch 8, **dadurch gekennzeichnet, dass** das Getrieberad (40) an dem Abtriebselement (4) einstückig mit einem Abtriebsrad (41) des Abtriebselements (4) ausgebildet ist, das für die Übertragung des sich aus den ersten und zweiten Antriebsdrehmomenten ergebenden Drehmoments vorgesehen ist.

10. Antriebseinheit nach einem der vorhergehenden Ansprüche, **dadurch gekennzeichnet, dass** für die Übertragung des sich aus den ersten und zweiten Antriebsdrehmomenten ergebenden Drehmoments ein Kraftübertragungsglied (13) vorgesehen ist, das mit einem Hinterrad (12) des Elektrofahrrads (1) gekoppelt ist, und das Abtriebselement (4) ein Abtriebsrad (41) umfasst, das zum Antrieben des Elektrofahrrads (1) mit dem sich aus den ersten und zweiten Antriebsdrehmomenten ergebenden Drehmoment mit dem Kraftübertragungsglied (13) verbunden ist.

11. Antriebseinheit nach einem der vorhergehenden Ansprüche, **dadurch gekennzeichnet, dass** die Antriebseinheit (A) ein Gehäuse (G) umfasst, in dem der Elektromotor (M) aufgenommen und die Antriebswelle drehbar gelagert ist, und das Abtriebselement (4) an einer Gehäuseöffnung (O) des Gehäuses (G) drehbar gelagert ist.

12. Antriebseinheit nach Anspruch 9 oder 10 und dem Anspruch 11, **dadurch gekennzeichnet, dass** das Abtriebsrad (41) an der Gehäuseöffnung (O) drehbar gelagert ist.

13. Elektrofahrrad mit einer Antriebseinheit nach einem der vorhergehenden Ansprüche.

14. Verfahren zur Steuerung wenigstens eines Elektromotors (M) einer Antriebseinheit (A) für ein Elektrofahrrad (1),
wobei die Antriebseinheit (A) wenigstens das Folgende umfasst:
- eine Antriebswelle (T) für eine muskelkraftbetätigte Erzeugung eines ersten Antriebsdrehmoments durch einen Fahrer des Elektrofahrrads (1),
- ein mit den Antriebswelle (T) drehfest verbundenes Abtriebselement (4) zur Bereitstellung eines Drehmoments zum Antreiben des Elektrofahrrads (1),
- den wenigstens einen Elektromotor (E) zur fremdkraftbetätigten Erzeugung eines zweiten Antriebsdrehmoments an einer mit dem Elektromotor (E) gekoppelten Rotorwelle (3),
- eine Getriebeeinrichtung (30, 40) zur Übertragung des zweiten Antriebsdrehmoments an das Abtriebselement (4) und
- wenigstens zwei räumlich zueinander beabstandete Signalgeber (50, 52; 50, 51) an einer das Abtriebselement (4) und die Antriebswelle (T) umfassenden Antriebsbaugruppe, über im Betrieb der Antriebseinheit (A) zwei zeitlich aufeinanderfolgende Messsignale (α_{Basis,} α_{Ges}; α_{Basis,} α_{Fahrer}) erzeugbar sind, deren zeitlicher Abstand zueinander in Abhängigkeit davon variiert, wie hoch die ersten und zweiten Antriebsdrehmomente sind,
wobei
- ein erster Signalgeber (52) der wenigstens zwei Signalgeber (50, 52; 50, 51) an einer ersten Stelle a) an der Antriebswelle (T) oder b) an einem der Antriebswelle (T) zugeordneten Bereich des Abtriebselements (4) vorgesehen ist und
- ein zweiter Signalgeber (50, 51) der wenigstens zwei Signalgeber (50, 52; 50, 51) an einer zweiten Stelle an einem der Getriebereinrichtung (30, 40) zugeordneten Bereich des Abtriebselements (4) vorgesehen ist,
und wobei zur Steuerung des wenigstens einen Elektromotors (M) eine aus den ersten und zweiten Messsignalen (α_{Basis,} α_{Ges}; α_{Basis,} α_{Fahrer}) bestimmte Steuerungsgröße verwendet wird.

15. Verfahren nach Anspruch 14, **dadurch gekennzeichnet, dass** für die Bestimmung der Steuerungsgröße zusätzlich wenigstens ein für das zweite Antriebsdrehmoment repräsentatives und/oder wenigstens ein für die Torsionssteifigkeit der Antriebsbaugruppe, der Antriebswelle (T) und/oder des Antriebselements (4) repräsentativer Steifigkeitswert verwendet wird, wobei optional der wenigstens eine Steifigkeitswert bei einer Kalibrierung der Antriebseinheit bestimmt und gespeichert wird.

## Claims

1. A drive unit for an electric bicycle (1), having
- an output element (4) for providing a torque for driving the electric bicycle (1),
- a drive shaft (T) for muscle-powered generation of a first drive torque by a rider of the electric bicycle (1),
- an electric motor (M) for non-muscle-powered generation of a second drive torque on a rotor shaft (3) coupled to the electric motor (M), and
- a transmission device (30, 40) for transmitting the second drive torque to the output element (4),
**characterized in that**
the output element (4) is connected to the drive shaft (T) in a rotationally fixed manner and the drive unit (A) comprises at least two spatially spaced signal generators (50, 52; 50, 51) on a drive assembly comprising the output element (4) and the drive shaft (T), via which two temporally successive measurement signals (α_{BaSis}, α_{Ges}; α_{Basis}, α_{Fahrer}) during operation of the drive unit (A) can be generated, the time interval between which varies depending on how high the first and second drive torques are, wherein
- a first signal generator (52) of the at least two signal generators (50, 52; 50, 51) is provided at a first position a) on the drive shaft (T) or b) on a region of the output element (4) associated with the drive shaft (T), and
- a second signal generator (50, 51) of the at least two signal generators (50, 52; 50, 51) is provided at a second position on a region of the output element (4) assigned to the transmission device (30, 40).

2. The drive unit according to claim 1, **characterized in that** the at least two signal generators (50, 52; 50, 51) are arranged in such a way that a change in the time interval between the measurement signals (α_{BaSis}, α_{Ges}; α_{Basis}, α_{Fahrer}) generated by the signal generators (50, 52; 50, 51) is representative of an elastic deformation in the drive assembly as a result of the generated first and second drive torques 35.

3. The drive unit according to claim 1 or 2, **characterized in that** the second position, in relation to an axis of rotation of the drive shaft (T), is located radially further outwards than the first position.

4. The drive unit according to one of the preceding claims, **characterized in that**
- the drive unit (A) comprises at least one Hall sensor (60, 61, 62) for generating the first and/or second measurement signal (α_{BaSis}, α_{Ges}; α_{Basis}, α_{Fahrer}) and/or
- the drive unit (A) comprises an electronic control unit (SE) which is set up, using the first and second measurement signals (α_{BaSis}, α_{Ges}; α_{Basis}, α_{Fahrer}) and using a signal representative of the second drive torque, to determine a control variable representative of the level of the first drive torque, wherein the electronic control unit (SE) is optionally configured to use at least one stiffness value stored in a memory, which is representative of the torsional stiffness of the drive assembly, the drive shaft (T), and/or the output element (4), for determining the control variable.

5. The drive unit according to one of the preceding claims, **characterized in that** the output element (4) comprises at least one spring element (7) which predetermines an elastic deformability of the output element (4) in at least one portion (45) of the output element (4) on which one of the signal generators (60, 62; 61, 62) is provided, wherein, optionally, the drive assembly comprises a blocking mechanism which limits the elastic deformability of the at least one portion (45) of the output element (4), as predetermined by the at least one spring element (7), to a predefined maximum deformation path.

6. The drive unit according to one of the preceding claims, **characterized in that** the transmission device (30, 40) comprises at least one transmission gear (40) which can be driven via the rotor shaft (3) and is provided for transmitting the second drive torque to the output element (4).

7. The drive unit according to claim 6, **characterized in that** the transmission gear (40) is connected to the output element (4) in a rotationally fixed manner.

8. The drive unit according to claim 7, **characterized in that** the transmission gear (40) is formed on the output element (4).

9. The drive unit according to claim 8, **characterized in that** the transmission gear (40) on the output element (4) is integrally formed with an output wheel (41) of the output element (4), which is provided for transmitting the torque resulting from the first and second drive torques.

10. The drive unit according to one of the preceding claims, **characterized in that** a power transmission member (13) is provided for transmitting the torque resulting from the first and second drive torques, which is coupled to a rear wheel (12) of the electric bicycle (1), and the output element (4) comprises an output wheel (41) which is connected to the power transmission member (13) for driving the electric bicycle (1) with the torque resulting from the first and second drive torques.

11. The drive unit according to one of the preceding claims, **characterized in that** the drive unit (A) comprises a housing (G) in which the electric motor (M) is accommodated and the drive shaft is rotatably mounted, and the output element (4) is rotatably mounted on a housing opening (O) of the housing (G).

12. The drive unit according to claim 9 or 10 and claim 11, **characterized in that** the output wheel (41) is rotatably mounted on the housing opening (O).

13. An electric bicycle with a drive unit according to one of the preceding claims.

14. A method for controlling at least one electric motor (M) of a drive unit (A) for an electric bicycle (1),
wherein the drive unit (A) comprises at least:
- a drive shaft (T) for muscle-powered generation of a first drive torque by a rider of the electric bicycle (1),
- an output element (4) connected to the drive shaft (T) in a rotationally fixed manner to provide torque for driving the electric bicycle (1),
- the at least one electric motor (E) for non-muscle-powered generation of a second drive torque on a rotor shaft (3) coupled to the electric motor (E),
- a transmission device (30, 40) for transmitting the second drive torque to the output element (4) and at least two spatially spaced signal generators (50, 52; 50, 51) on a drive assembly comprising the output element (4) and the drive shaft (T), via which two temporally successive measurement signals (α_{BaSis}, α_{Ges}; α_{Basis}, α_{Fahrer}) during operation of the drive unit (A) can be generated, the time interval between which varies depending on how high the first and second drive torques are,
wherein
- a first signal generator (52) of the at least two signal generators (50, 52; 50, 51) is provided at a first position a) on the drive shaft (T) or b) on a region of the output element (4) associated with the drive shaft (T), and
- a second signal generator (50, 51) of the at least two signal generators (50, 52; 50, 51) is provided at a second location on a region of the output element (4) assigned to the transmission device (30, 40),
and wherein a control variable determined from the first and second measurement signals (α_{BaSis}, α_{Ges}; α_{Basis}, α_{Fahrer}) is used to control the at least one electric motor (M).

15. The method according to claim 14, **characterized in that** at least one stiffness value representative of the second drive torque and/or at least one stiffness value representative of the torsional stiffness of the drive assembly, the drive shaft (T) and/or the drive element (4) is additionally used to determine the control variable, wherein, optionally, the at least one stiffness value is determined and stored during calibration of the drive unit.

## Revendications

1. Unité d'entraînement pour un vélo électrique (1), comprenant
- un élément de sortie (4) permettant de fournir un couple permettant d'entrainer le vélo électrique (1),
- un arbre d'entraînement (T) destiné à générer un premier couple d'entraînement du fait de l'action d'une force musculaire d'un conducteur du vélo électrique (1),
- un moteur électrique (M) permettant de générer un second couple d'entraînement au niveau d'un arbre de rotor (3) couplé au moteur électrique (M) du fait de l'action d'une force externe et
- un dispositif de transmission (30, 40) permettant de transmettre le second couple d'entraînement à l'élément de sortie (4),
**caractérisée en ce que**
l'élément de sortie (4) est relié de manière solidaire en rotation à l'arbre d'entraînement (T) et l'unité d'entraînement (A) comprend au moins deux générateurs de signal (50, 52 ; 50, 51) espacés spatialement l'un de l'autre au niveau d'un module d'entraînement comprenant l'élément de sortie (4) et l'arbre d'entraînement (T) et par l'intermédiaire desquels deux signaux de mesure chronologiquement successifs (a_{Basis}, O_{Ges} ; a_{Basis}, O_{Fahrer}), dont l'intervalle de temps l'un par rapport à l'autre varie en fonction de la valeur des premier et second couples d'entraînement, peuvent être générés pendant le fonctionnement de l'unité d'entraînement (A), dans laquelle
- un premier générateur de signal (52) parmi les au moins deux générateurs de signal (50, 52 ; 50, 51) est fourni à un premier emplacement a) sur l'arbre d'entraînement (T) ou b) au niveau d'une région de l'élément de sortie (4) associée à l'arbre d'entraînement (T) et
- un second générateur de signal (50, 51) parmi les au moins deux générateurs de signal (50, 52 ; 50, 51) est fourni à un second emplacement au niveau d'une région de l'élément de sortie (4) associée au dispositif de transmission (30, 40).

2. Unité d'entraînement selon la revendication 1, **caractérisée en ce que** les au moins deux générateurs de signal (50, 52 ; 50, 51) sont agencés de telle manière qu'une modification de l'intervalle de temps entre les signaux de mesure (α_{basis}, α_{Ges} ; α_{basis}, α_{Fahrer}) générés par les générateurs de signal (50, 52 ; 50, 51) est représentative d'une déformation élastique au niveau du module d'entraînement en raison des premier et second couples d'entraînement générés.

3. Unité d'entraînement selon la revendication 1 ou 2, **caractérisée en ce que** le second emplacement est situé, par rapport à un axe de rotation de l'arbre d'entraînement (T), radialement plus loin vers l'extérieur que le premier emplacement.

4. Unité d'entraînement selon l'une quelconque des revendications précédentes, **caractérisée en ce que**
- l'unité d'entraînement (A) permettant de générer le premier et/ou le second signal de mesure (α_{basis}, α_{Ges} ; α_{basis}, α_{Fahrer}) comprend au moins un capteur à effet Hall (60, 61, 62) et/ou
- l'unité d'entraînement (A) comprend une unité de commande électronique (SE) qui est conçue pour déterminer une grandeur de commande représentative de la valeur du premier couple d'entraînement en utilisant les premier et second signaux de mesure (α_{basis}, α _{Ges} ; α_{basis}, α_{Fahrer}) ainsi qu'en utilisant un signal représentatif du second couple d'entraînement, dans laquelle l'unité de commande électronique (SE) est éventuellement configurée pour utiliser au moins une valeur de rigidité, stockée dans une mémoire et représentative de la rigidité en torsion du module d'entraînement, de l'arbre d'entraînement (T) et/ou de l'élément de sortie (4), afin de déterminer la grandeur de commande.

5. Unité d'entraînement selon l'une quelconque des revendications précédentes, **caractérisée en ce que** l'élément de sortie (4) comprend au moins un élément formant ressort (7) qui spécifie une déformabilité élastique de l'élément de sortie (4) dans au moins une section (45) de l'élément de sortie (4) au niveau de laquelle un des générateurs de signal (60, 62 ; 61, 62) est fourni, dans laquelle le module d'entraînement comprend éventuellement un mécanisme de blocage qui limite à une course de déformation maximale prédéfinie, par l'intermédiaire du au moins un élément formant ressort (7), une déformabilité élastique spécifiée de la au moins une section (45) de l'élément de sortie (4).

6. Unité d'entraînement selon l'une quelconque des revendications précédentes, **caractérisée en ce que** le dispositif de transmission (30, 40) comprend au moins une roue d'engrenage (40) qui peut être entraînée par l'arbre de rotor (3) et qui est fournie afin de transmettre le second couple d'entraînement à l'élément de sortie (4).

7. Unité d'entraînement selon la revendication 6, **caractérisée en ce que** la roue d'engrenage (14, 38, 40) est reliée de manière solidaire en rotation à l'élément de sortie (4).

8. Unité d'entraînement selon la revendication 7, **caractérisée en ce que** la roue d'engrenage (40) est formée au niveau de l'élément de sortie (4).

9. Unité d'entraînement selon la revendication 8, **caractérisée en ce que** la roue d'engrenage (40) est formée au niveau de l'élément de sortie (4) d'un seul tenant avec une roue de sortie (41) de l'élément de sortie (4) qui est fournie afin de transmettre le couple résultant des premier et second couples d'entraînement.

10. Unité d'entraînement selon l'une quelconque des revendications précédentes, **caractérisée en ce qu'**un élément de transmission de force (13) qui est couplé à une roue arrière (12) du vélo électrique (1) est fourni en vue de la transmission du couple résultant des premier et second couples d'entraînement, et l'élément de sortie (4) comprend une roue de sortie (41) qui est reliée à l'élément de transmission de force (13) afin d'entraîner le vélo électrique (1) avec le couple résultant des premier et second couples d'entraînement.

11. Unité d'entraînement selon l'une quelconque des revendications précédentes, **caractérisée en ce que** l'unité d'entraînement (A) comprend un boîtier (G) dans lequel le moteur électrique (M) est accueilli et dans lequel l'arbre d'entraînement est monté de manière à pouvoir tourner, et l'élément de sortie (4) est monté au niveau d'un orifice de boîtier (O) du boîtier (G) de manière à pouvoir tourner.

12. Unité d'entraînement selon la revendication 9 ou 10 et la revendication 11, **caractérisée en ce que** la roue de sortie (41) est montée au niveau de l'orifice de boîtier (O) de manière à pouvoir tourner.

13. Vélo électrique comprenant une unité d'entraînement selon l'une quelconque des revendications précédentes.

14. Procédé de commande d'au moins un moteur électrique (M) d'une unité d'entraînement (A) pour un vélo électrique (1),
dans lequel l'unité d'entraînement (A) comprend au moins ce qui suit :
- un arbre d'entraînement (T) destiné à générer un premier couple d'entraînement du fait de l'action d'une force musculaire d'un conducteur du vélo électrique (1),
- un élément de sortie (4) relié de manière solidaire en rotation à l'arbre d'entraînement (T) et permettant de fournir un couple permettant d'entraîner le vélo électrique (1),
- le au moins un moteur électrique (E) permettant de générer un second couple d'entraînement au niveau d'un arbre de rotor (3) couplé au moteur électrique (E) du fait de l'action d'une force externe,
- un dispositif de transmission (30, 40) permettant de transmettre le second couple d'entraînement à l'élément de sortie (4) et
- au moins deux générateurs de signal (50, 52 ; 50, 51) espacés spatialement l'un de l'autre au niveau d'un module d'entraînement comprenant l'élément de sortie (4) et l'arbre d'entraînement (T) et par l'intermédiaire desquels deux signaux de mesure chronologiquement successifs (asasis, O_{Ges} ; a_{Basis}, O_{Fahrer}), dont l'intervalle de temps l'un par rapport à l'autre varie en fonction de la valeur des premier et second couples d'entraînement, peuvent être générés pendant le fonctionnement de l'unité d'entraînement (A),
dans lequel :
- un premier générateur de signal (52) parmi les au moins deux générateurs de signal (50, 52 ; 50, 51) est fourni à un premier emplacement a) sur l'arbre d'entraînement (T) ou b) au niveau d'une région de l'élément de sortie (4) associée à l'arbre d'entraînement (T) et
- un second générateur de signal (50, 51) parmi les au moins deux générateurs de signal (50, 52 ; 50, 51) est fourni à un second emplacement au niveau d'une région de l'élément de sortie (4) associée au dispositif de transmission (30, 40).
et dans lequel une grandeur de commande déterminée à partir des premier et second signaux de mesure (α_{basis}, α_{Ges} ; α_{Basis}, α_{Fahrer}) est utilisée pour commander le au moins un moteur électrique (M).

15. Procédé selon la revendication 14, **caractérisé en ce que** au moins une valeur de rigidité représentative du deuxième couple d'entraînement et/ou au moins une valeur de rigidité représentative de la rigidité en torsion du module d'entraînement, de l'arbre d'entraînement (T) et/ou de l'élément d'entraînement (4) est/sont en outre utilisée(s) pour déterminer la grandeur de commande, dans lequel la au moins une valeur de rigidité est éventuellement déterminée et mémorisée lors d'un étalonnage de l'unité d'entraînement.
